# EUROPEAN PATENT SPECIFICATION

(11) **EP 3 257 688 B1**
(45) Date of publication and mention of the grant of the patent: **05.12.2018**
(21) Application number: 17175223.1
(22) Date of filing: 09.06.2017
(51) Int. Cl.: B60C 1/00, C08L 9/00, C08L 31/00, C08L 31/04, C08F 218/10, C08F 236/06, C08K 3/04, C08K 3/36

(54) **RUBBER COMPOSITION AND PNEUMATIC TIRE COMPRISING TREAD FORMED FROM SAID RUBBER COMPOSITION**
KAUTSCHUKZUSAMMENSETZUNG UND LUFTREIFEN MIT AUS BESAGTER KAUTSCHUKZUSAMMENSETZUNG GEFORMTEN LAUFFLÄCHE
COMPOSITION DE CAOUTCHOUC ET PNEUMATIQUE AVEC BANDE DE ROULEMENT FABRIQUÉE À PARTIR DE LADITE COMPOSITION DE CAOUTCHOUC

(30) Priority: 14.06.2016 JP 2016118115
(43) Date of publication of application: 20.12.2017
(73) Proprietor: Sumitomo Rubber Industries, Ltd., Kobe-shi, Hyogo-ken 651-0072 (JP)
(72) Inventor: HABA, Toshifumi, Kobe-shi, Hyogo 651-0072 (JP); OSHIMO, Masaki, Kobe-shi, Hyogo 651-0072 (JP)
(74) Representative: Manitz Finsterwald Patentanwälte PartmbB

(56) References cited:
- WO-A1-2015/040991
- WO-A1-2015/075971
- JP-A- 2011 144 323

## Description

### TECHNICAL FIELD

The present invention relates to a rubber composition and a pneumatic tire including a tread formed from the rubber composition.

### BACKGROUND ART

Tire treads are required to have high properties such as mainly fuel economy, abrasion resistance, and wet grip performance. Various techniques for improving these properties have been studied.

For example, fuel economy is known to be improved by introducing a functional group having an affinity for filler into a polymer chain end. Abrasion resistance is known to be improved by using a high molecular weight polymer having a molecular weight of 250,000 or more. Wet grip performance is known to be improved by using a polymer having a high glass transition temperature (Tg).

However, the introduction of a functional group having an affinity for filler, the use of a high molecular weight polymer, and the use of a polymer having a high Tg resulting from increased styrene content all unfortunately increase the hardness of rubber compositions, thereby deteriorating processability.

Patent Literature 1 discloses a tire rubber composition containing a liquid resin having a softening point of -20°C to 45°C and a specific silica to improve fuel economy, abrasion resistance, and wet grip performance. However, there is still room for improvement to achieve a balanced improvement in these properties while ensuring good processability.

### CITATION LIST

### PATENT LITERATURE

Patent Literature 1: JP 2013-053296 A

### SUMMARY OF INVENTION

### TECHNICAL PROBLEM

The present invention aims to solve the above problem and provide a rubber composition that achieves a balanced improvement in fuel economy, abrasion resistance, and wet grip performance while having good processability, and also provide a pneumatic tire including a tread formed from the rubber composition.

### SOLUTION TO PROBLEM

The present invention relates to a rubber composition, containing: a rubber component including a copolymer; and at least one of carbon black or silica, the copolymer containing a structural unit derived from a conjugated diene monomer and a structural unit derived from a compound represented by the following formula (1): 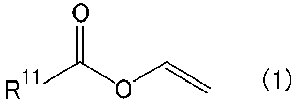 wherein R¹¹ represents a C1-C30 hydrocarbon group.

The copolymer preferably contains, based on 100% by mass of structural units of the copolymer, 5% to 95% by mass of the structural unit derived from a conjugated diene monomer and 5% to 95% by mass of the structural unit derived from a compound of formula (1).

The copolymer preferably has a weight average molecular weight of 5,000 to 2,000,000 and a molecular weight distribution of 2.1 to 11.

The compound of formula (1) is preferably vinyl cinnamate.

The conjugated diene monomer is preferably 1,3-butadiene.

The copolymer preferably has at its end a functional group having an affinity for filler.

The present invention also relates to a pneumatic tire, including a tread that is formed from the rubber composition.

### ADVANTAGEOUS EFFECTS OF INVENTION

The rubber composition of the present invention contains: a rubber component including a copolymer that contains a structural unit derived from a conjugated diene monomer and a structural unit derived from a compound of formula (1); and carbon black and/or silica. Such a rubber composition achieves a balanced improvement in fuel economy, abrasion resistance, and wet grip performance while having good processability.

### DESCRIPTION OF EMBODIMENTS

The rubber composition of the present invention contains a rubber component including a copolymer that contains a structural unit derived from a conjugated diene monomer and a structural unit derived from a compound of formula (1). The rubber composition also contains carbon black and/or silica. When a copolymer containing a structural unit derived from a conjugated diene monomer and, further, a structural unit derived from a compound of formula (1) is used together with carbon black and/or silica, the resulting rubber composition shows good processability before vulcanization, and further achieves a balanced improvement in fuel economy, abrasion resistance, and wet grip performance. Thus, a rubber composition excellent in the balance of these properties can be provided.

The copolymer contains a structural unit derived from a conjugated diene monomer. The conjugated diene monomer preferably has 4 to 8 carbon atoms, and examples include 1,3-butadiene, isoprene, and 2,3-dimethyl-1,3-butadiene. In view of fuel economy, abrasion resistance, and wet grip performance, 1,3-butadiene or isoprene is preferred among these, with 1,3-butadiene being more preferred. These monomers may be used alone, or two or more of these may be used in combination.

In the copolymer, the amount of the structural unit derived from a conjugated diene monomer, based on 100% by mass of the structural units of the copolymer, is preferably 5% by mass or more, more preferably 30% by mass or more, still more preferably 50% by mass or more, particularly preferably 60% by mass or more. The amount is also preferably 95% by mass or less, more preferably 90% by mass or less, still more preferably 80% by mass or less. When it is less than 5% by mass, abrasion resistance may decrease. When it is more than 95% by mass, fuel economy may decrease.

The copolymer contains a structural unit derived from a compound represented by the formula (1) below. When the copolymer contains a structural unit derived from a compound of formula (1) together with the structural unit derived from a conjugated diene monomer, preferably 1,3-butadiene, a balanced improvement in fuel economy, abrasion resistance, and wet grip performance can be achieved while ensuring good processability.

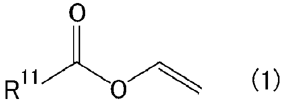

In formula (1), R¹¹ represents a C1-C30 hydrocarbon group.

Examples of the hydrocarbon group for R¹¹ include aliphatic hydrocarbon groups, alicyclic hydrocarbon groups, aromatic hydrocarbon groups, and combinations of these hydrocarbon groups. In order to better achieve the effects of the present invention, the hydrocarbon group R¹¹ preferably has 1 to 20 carbon atoms, more preferably 3 to 16 carbon atoms, still more preferably 5 to 12 carbon atoms.

In order to better achieve the effects of the present invention, R¹¹ is preferably a group represented by -R¹²-R¹³ where R¹² represents a C1-C20 aliphatic hydrocarbon group, and R¹³ represents a C6-C10 aromatic hydrocarbon group.

The aliphatic hydrocarbon group for R¹² preferably has 1 to 10 carbon atoms, more preferably 2 to 4 carbon atoms. Examples of the aliphatic hydrocarbon group R¹² include alkylene and alkenylene groups, with alkenylene groups being more preferred. Specific examples of the alkylene groups include methylene, ethylene, propylene, butylene, and pentylene groups. Specific examples of the alkenylene groups include vinylene, 1-propenylene, 2-propenylene, 1-butenylene, 2-butenylene, 1-pentenylene, and 2-pentenylene groups, with a vinylene group being more preferred.

Examples of the C6-C10 aromatic hydrocarbon group for R¹³ include phenyl, benzyl, phenethyl, tolyl, xylyl, and naphthyl groups. Preferred among these are phenyl, tolyl, and naphthyl groups, with a phenyl group being more preferred.

Specific examples of the compound of formula (1) include vinyl acetate, vinyl propionate, vinyl butyrate, vinyl hexanoate, vinyl octanoate, vinyl decanoate, vinyl ethylhexanoate, vinyl crotonate, vinyl benzoate, and vinyl cinnamate. Vinyl cinnamate is preferred among these because it significantly improves the balance of fuel economy, abrasion resistance, and wet grip performance while ensuring good processability.

In the copolymer, the amount of the structural unit derived from a compound of formula (1), based on 100% by mass of the structural units of the copolymer, is preferably 5% by mass or more, more preferably 10% by mass or more, still more preferably 20% by mass or more. The amount is also preferably 95% by mass or less, more preferably 70% by mass or less, still more preferably 50% by mass or less, particularly preferably 40% by mass or less. When it is less than 5% by mass, fuel economy may decrease. When it is more than 95% by mass, abrasion resistance may decrease.

The copolymer may contain a structural unit other than the structural unit derived from a conjugated diene monomer and the structural unit derived from a compound of formula (1).

In the copolymer, the combined amount of the structural unit derived from a conjugated diene monomer and the structural unit derived from a compound of formula (1), based on 100% by mass of the structural units of the copolymer, is preferably 60% by mass or more, more preferably 80% by mass or more, still more preferably 90% by mass or more, and may be 100% by mass. When the combined amount falls within the range indicated above, the effects of the present invention can be better achieved.

The copolymer may contain a structural unit derived from a compound represented by the formula (2) below. When the copolymer contains a structural unit derived from a compound of formula (2), preferably styrene, in addition to the structural unit derived from a conjugated diene monomer and the structural unit derived from a compound of formula (1), wet grip performance and abrasion resistance (especially wet grip performance) can be more significantly improved, and therefore the balance of fuel economy, abrasion resistance, and wet grip performance can be more significantly improved while ensuring good processability.

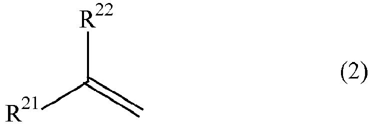

In formula (2), R²¹ represents a hydrogen atom, a C1-C3 aliphatic hydrocarbon group, a C3-C8 alicyclic hydrocarbon group, or a C6-C10 aromatic hydrocarbon group, and R²² represents a hydrogen atom or a methyl group.

Examples of the C1-C3 aliphatic hydrocarbon group in the compound of formula (2) include C1-C3 alkyl groups such as methyl, ethyl, n-propyl, and isopropyl groups, with a methyl group being preferred.

Examples of the C3-C8 alicyclic hydrocarbon group in the compound of formula (2) include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

Examples of the C6-C10 aromatic hydrocarbon group in the compound of formula (2) include phenyl, benzyl, phenethyl, tolyl, xylyl, and naphthyl groups. In view of high reactivity, phenyl, tolyl, and naphthyl groups are preferred among these, with a phenyl group being more preferred.

R²¹ is preferably a C6-C10 aromatic hydrocarbon group. R²² is preferably a hydrogen atom.

Examples of the compound of formula (2) include styrene, 2-methylstyrene, 3-methylstyrene, 4-methylstyrene, α-methylstyrene, 2,4-dimethylstyrene, vinylethylbenzene, α-vinylnaphthalene, β-vinylnaphthalene, and vinylxylene. In view of high reactivity, styrene, α-methylstyrene, α-vinylnaphthalene, and β-vinylnaphthalene are preferred among these, with styrene being more preferred.

In the copolymer, the amount of the structural unit derived from a compound of formula (2), based on 100% by mass of the structural units of the copolymer, is preferably 1% by mass or more, more preferably 5% by mass or more, still more preferably 10% by mass or more. The amount is also preferably 50% by mass or less, more preferably 30% by mass or less, still more preferably 20% by mass or less. When the amount falls within the range indicated above, the effects of the present invention can be better achieved.

In the copolymer, the combined amount of the structural unit derived from a compound of formula (1) and the structural unit derived from a compound of formula (2), based on 100% by mass of the structural units of the copolymer, is preferably 5% by mass or more, more preferably 10% by mass or more, still more preferably 20% by mass or more. The combined amount is also preferably 95% by mass or less, more preferably 70% by mass or less, still more preferably 50% by mass or less, particularly preferably 40% by mass or less. When the combined amount falls within the range indicated above, the effects of the present invention can be better achieved.

The amounts of the structural unit derived from a conjugated diene monomer, the structural unit derived from a compound of formula (1), and other structural units in the copolymer can be measured by NMR (e.g. available from Bruker).

The copolymer may be produced by any copolymerization method, such as solution polymerization, emulsion polymerization, gas phase polymerization, or bulk polymerization. Emulsion polymerization is preferred because this method produces a high yield of copolymers with a high degree of monomer randomness.

In the case of emulsion polymerization, the copolymer can be synthesized by known emulsion polymerization processes. For example, the copolymer may be suitably produced by a method including the steps of: emulsifying the monomers constituting the copolymer, i.e. a diene monomer and a compound of formula (1), and optionally a compound of formula (2) in water using an emulsifier; and adding a radical initiator to the resulting emulsion to cause radical polymerization.

The emulsion may be prepared by a known emulsification method using an emulsifier. The emulsifier is not particularly limited, and may be any known material, such as a fatty acid salt or a rosin acid salt. Examples of the fatty acid salt or rosin acid salt include potassium or sodium salts of capric acid, lauric acid, and myristic acid.

The emulsion polymerization can be carried out by known methods using radical polymerization initiators. Any radical polymerization initiator may be used including known materials, e.g. redox initiators such as paramenthane hydroperoxide, and persulfates such as ammonium persulfate.

The temperature in the emulsion polymerization may be appropriately adjusted according to the type of radical initiator used, and it preferably ranges from -30°C to 50°C, more preferably from -10°C to 20°C.

The emulsion polymerization can be terminated by adding a polymerization terminator to the polymerization system. Any polymerization terminator may be used including known materials, e.g. N,N'-dimethyldithiocarbamate, diethylhydroxylamine, and hydroquinone.

The copolymer in the present invention is preferably produced by emulsion polymerization in the presence of a chain transfer agent. The thus produced copolymer further improves processability, fuel economy, and abrasion resistance.

A chain transfer agent refers to a radical polymerization controlling agent that can act on the growing polymer chain end to terminate the polymer growth while generating a new polymerization-initiating radical. This agent enables control of the molecular weight and molecular weight distribution of the polymer (reduction of the molecular weight and narrowing of the molecular weight distribution), control of the polymer chain end structure, and other functions.

Examples of the chain transfer agent include compounds containing a mercapto group, such as n-octyl mercaptan, n-nonyl mercaptan, n-decyl mercaptan, n-dodecyl mercaptan, t-dodecyl mercaptan, and n-hexadecyl mercaptan, with t-dodecyl mercaptan being preferred because of easier control of the molecular weight.

The chain transfer agent may also suitably be a compound that contains a functional group having an affinity for filler and a mercapto group. When a compound that contains a mercapto group and further a functional group having an affinity for filler is used as the chain transfer agent, the functional group having an affinity for filler will be introduced into the polymer chain end, with the result that fuel economy, wet grip performance, and abrasion resistance can be more significantly improved. Examples of the functional group having an affinity for filler include amino, amide, alkoxysilyl, isocyanate, imino, imidazole, urea, ester, ether, carbonyl, carboxyl, hydroxyl, nitrile, and pyridyl groups. Preferred among these are alkoxysilyl and ester groups, with alkoxysilyl groups being more preferred. The term "filler" refers to reinforcing filler such as carbon black or silica.

The compound containing an alkoxysilyl group may suitably be a compound represented by the formula (3) below. In this case, fuel economy, wet grip performance, and abrasion resistance can be more significantly improved.

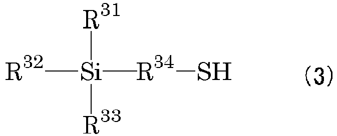

In formula (3), R³¹ to R³³ may be the same as or different from one another and each represent a branched or unbranched C1-C12 alkyl group, a branched or unbranched C1-C12 alkoxy group, or a group represented by -O-(R³⁵-O)_{z}-R³⁶ where R³⁵ groups, the number of which is indicated by z, may be the same as or different from one another and each represent a branched or unbranched divalent C1-C30 hydrocarbon group, R³⁶ represents a branched or unbranched C1-C30 alkyl group, a branched or unbranched C2-C30 alkenyl group, a C6-C30 aryl group, or a C7-C30 aralkyl group, and z represents an integer of 1 to 30, provided that at least one of R³¹ to R³³ is a branched or unbranched C1-C12 alkoxy group; and R³⁴ represents a branched or unbranched C1-C6 alkylene group.

R³¹ to R³³ each represent a branched or unbranched C1-C12 alkyl group, a branched or unbranched C1-C12 alkoxy group, or a group represented by -O-(R³⁵-O)_{z}-R³⁶, and at least one of R³¹ to R³³ is a branched or unbranched C1-C12 alkoxy group.

In order to better achieve the effects of the present invention, further at least one of R³¹ to R³³ is preferably a group represented by -O-(R³⁵-O)_{z}-R³⁶. More preferably, the other two of R³¹ to R³³ are groups represented by -O-(R³⁵-O)_{z}-R³⁶.

Also preferably, all of R³¹ to R³³ are branched or unbranched alkoxy groups each having 1 to 12 carbon atoms, preferably 1 to 5 carbon atoms, more preferably 1 to 3 carbon atoms.

Examples of the branched or unbranched C1-C12, preferably C1-C5 alkyl group for R³¹ to R³³ include methyl, ethyl, n-propyl, isopropyl, n-butyl, iso-butyl, sec-butyl, tert-butyl, pentyl, hexyl, heptyl, 2-ethylhexyl, octyl, and nonyl groups.

Examples of the branched or unbranched C1-C12, preferably C1-C5, more preferably C1-C3 alkoxy group for R³¹ to R³³ include methoxy, ethoxy, n-propoxy, isopropoxy, n-butoxy, iso-butoxy, sec-butoxy, tert-butoxy, pentyloxy, hexyloxy, heptyloxy, 2-ethylhexyloxy, octyloxy, and nonyloxy groups.

In the group: -O-(R³⁵-O)_{z}-R³⁶ for R³¹ to R³³, R³⁵ represents a branched or unbranched divalent hydrocarbon group having 1 to 30 carbon atoms, preferably 1 to 15 carbon atoms, more preferably 1 to 3 carbon atoms.

Examples of the hydrocarbon group include branched or unbranched C1-C30 alkylene groups, branched or unbranched C2-C30 alkenylene groups, branched or unbranched C2-C30 alkynylene groups, and C6-C30 arylene groups, with branched or unbranched C1-C30 alkylene groups being preferred.

Examples of branched or unbranched C1-C30, preferably C1-C15, more preferably C1-C3 alkylene groups for R³⁵ include methylene, ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups.

Examples of branched or unbranched C2-C30, preferably C2-C15, more preferably C2-C3 alkenylene groups for R³⁵ include vinylene, 1-propenylene, 2-propenylene, 1-butenylene, 2-butenylene, 1-pentenylene, 2-pentenylene, 1-hexenylene, 2-hexenylene, and 1-octenylene groups.

Examples of branched or unbranched C2-C30, preferably C2-C15, more preferably C2-C3 alkynylene groups for R³⁵ include ethynylene, propynylene, butynylene, pentynylene, hexynylene, heptynylene, octynylene, nonynylene, decynylene, undecynylene, and dodecynylene groups.

Examples of C6-C30, preferably C6-C15 arylene groups for R³⁵ include phenylene, tolylene, xylylene, and naphthylene groups.

The symbol z represents an integer of 1 to 30, preferably of 2 to 20, more preferably of 3 to 7, still more preferably of 5 or 6.

R³⁶ represents a branched or unbranched C1-C30 alkyl group, a branched or unbranched C2-C30 alkenyl group, a C6-C30 aryl group, or a C7-C30 aralkyl group, preferably a branched or unbranched C1-C30 alkyl group.

Examples of branched or unbranched C1-C30, preferably C3-C25, more preferably C10-C15 alkyl groups for R³⁶ include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

Examples of branched or unbranched C2-C30, preferably C3-C25, more preferably C10-C15 alkenyl groups for R³⁶ include vinyl, 1-propenyl, 2-propenyl, 1-butenyl, 2-butenyl, 1-pentenyl, 2-pentenyl, 1-hexenyl, 2-hexenyl, 1-octenyl, decenyl, undecenyl, dodecenyl, tridecenyl, tetradecenyl, pentadecenyl, and octadecenyl groups.

Examples of C6-C30, preferably C10-C20 aryl groups for R³⁶ include phenyl, tolyl, xylyl, naphthyl, and biphenyl groups.

Examples of C7-C30, preferably C10-C20 aralkyl groups for R³⁶ include benzyl and phenethyl groups.

Specific examples of the group represented by -O-(R³⁵-O)_{z}-R³⁶ include -O-(C₂H₄-O)₅-C₁₁H₂₃, -O-(C₂H₄-O)₅-C₁₂H₂₅,-O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, and-O-(C₂H₄-O)₇-C₁₃H₂₇. Preferred among these are -O-(C₂H₄-O)₅-C₁₁H₂₃, -O-(C₂H₄-O)₅-C₁₃H₂₇, -O-(C₂H₄-O)₅-C₁₅H₃₁, and -O-(C₂H₄-O)₆-C₁₃H₂₇.

Examples of the branched or unbranched C1-C6, preferably C1-C5 alkylene group for R³⁴ include C1-C6 groups as described for the branched or unbranched C1-C30 alkylene groups for R³⁵.

Examples of the compound of formula (3) include 3-mercaptopropyltrimethoxysilane, 3-mercaptopropyltriethoxysilane, 2-mercaptoethyltrimethoxysilane, 2-mercaptoethyltriethoxysilane, and the compound (Si363 available from EVONIK-DEGUSSA) represented by the formula below. In order to better achieve the effects of the present invention, the compound of formula (3) may suitably be 3-mercaptopropyltriethoxysilane or the compound of the formula below, more suitably the compound of the formula below. These compounds may be used alone, or two or more of these may be used in combination.

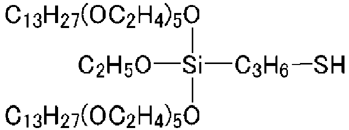

The compound containing an ester group may suitably be a compound represented by the formula (4) below. In this case, fuel economy, wet grip performance, and abrasion resistance can be more significantly improved.

R⁴¹-A-R⁴²-SH (4)

In formula (4), R⁴¹ represents a branched or unbranched C1-C12 alkyl group; R⁴² represents a branched or unbranched C1-C6 alkylene group; and A represents an ester group represented by -COO- or -OCO-.

Examples of the branched or unbranched C1-C12, preferably C5-C10 alkyl group for R⁴¹ include those described for the branched or unbranched C1-C12 alkyl groups for R³¹ to R³³.

Examples of the branched or unbranched C1-C6, preferably C1-C3 alkylene group for R⁴² include C1-C6 groups as described for the branched or unbranched C1-C30 alkylene groups for R³⁵.

Suitable examples of the compound of formula (4) include methyl 3-mercaptopropionate, ethyl 3-mercaptopropionate, propyl 3-mercaptopropionate, butyl 3-mercaptopropionate, pentyl 3-mercaptopropionate, hexyl 3-mercaptopropionate, heptyl 3-mercaptopropionate, octyl 3-mercaptopropionate, 2-ethylhexyl 3-mercaptopropionate, 2-ethylhexyl mercaptoethanoate, 2-mercaptoethyl methanoate, 2-mercaptoethyl ethanoate, 2-mercaptoethyl propionate, 2-mercaptoethyl butanoate, 2-mercaptoethyl pentanoate, 2-mercaptoethyl hexanoate, 2-mercaptoethyl heptanoate, 2-mercaptoethyl octanoate, and 2-mercaptomethyl octanoate, with 2-ethylhexyl 3-mercaptopropionate or 2-mercaptoethyl octanoate being preferred. These compounds may be used alone, or two or more of these may be used in combination.

The copolymer preferably has a weight average molecular weight (Mw) of 5,000 or more, more preferably 50,000 or more, still more preferably 100,000 or more, particularly preferably 300,000 or more, most preferably 450,000 or more. The weight average molecular weight is also preferably 2,000,000 or less, more preferably 1,500,000 or less, still more preferably 1,000,000 or less, particularly preferably 700,000 or less. When it is less than 5,000, fuel economy and abrasion resistance may deteriorate. When it is more than 2,000,000, processability may deteriorate.

The copolymer preferably has a ratio of the Mw to the number average molecular weight (Mn), that is, a molecular weight distribution (Mw/Mn), of 2.1 or more, more preferably 2.5 or more, still more preferably 3.0 or more, particularly preferably 3.8 or more. The molecular weight distribution is also preferably 11 or less, more preferably 8.0 or less, still more preferably 5.0 or less. When it is less than 2.1, processability may deteriorate. When it is more than 11, fuel economy may deteriorate.

The Mw and Mn values are determined by gel permeation chromatography (GPC) calibrated with polystyrene standards.

The copolymer preferably has a glass transition temperature (Tg) of -100°C to 100°C, more preferably -70°C to 0°C. When the Tg falls within the range indicated above, the effects of the present invention can be sufficiently achieved.

The Tg values are measured with a differential scanning calorimeter (Q200, available from TA Instruments, Japan) at a temperature increase rate of 10°C/min in accordance with JIS K 7121:1987.

The copolymer preferably has a Mooney viscosity, ML₁₊₄, at 130°C of 30 to 100, more preferably 40 to 80. When the ML₁₊₄ falls within the range indicated above, the effects of the present invention can be sufficiently achieved.

The Mooney viscosity (ML₁₊₄, 130°C) values are determined by measuring Mooney viscosity at 130°C in accordance with JIS K 6300.

In the rubber composition of the present invention, the amount of the copolymer based on 100% by mass of the rubber component is preferably 1% by mass or more, more preferably 50% by mass or more, still more preferably 70% by mass or more, particularly preferably 80% by mass or more, and may be 100% by mass. Less than 1% by mass of the copolymer may be too little to achieve the effects of the present invention.

Examples of other rubber materials that can be used in combination with the copolymer in the rubber component in the present invention include diene rubbers such as natural rubber (NR), polyisoprene rubber (IR), polybutadiene rubber (BR), styrene-butadiene rubber (SBR), styrene-isoprene rubber (SIR), styrene-isoprene-butadiene rubber (SIBR), ethylene-propylene-diene rubber (EPDM), chloroprene rubber (CR), acrylonitrile-butadiene rubber (NBR), and butyl rubber (IIR). These diene rubbers may be used alone, or two or more of these may be used in combination.

The rubber composition of the present invention contains carbon black and/or silica as filler.

The carbon black may be one commonly used in tire production, and examples include SAF, ISAF, HAF, FF, FEF, and GPF. These materials may be used alone, or two or more of these may be used in combination.

The carbon black preferably has a nitrogen adsorption specific surface area (N₂SA) of 80 m²/g or more, more preferably 100 m²/g or more. The N₂SA is also preferably 200 m²/g or less, more preferably 150 m²/g or less. Carbon black having a N₂SA of less than 80 m²/g tends to provide low reinforcing properties, failing to sufficiently improve abrasion resistance. Carbon black having a N₂SA of more than 200 m²/g tends to poorly disperse, thereby deteriorating fuel economy.

The N₂SA of carbon black can be measured in accordance with JIS K 6217-2:2001.

The carbon black preferably has a dibutyl phthalate oil absorption (DBP) of 50 mL/100 g or more, more preferably 100 mL/100 g or more. The DBP is also preferably 200 mL/100 g or less, more preferably 150 mL/100 g or less. Carbon black having a DBP of less than 50 mL/100 g may provide insufficient reinforcing properties, resulting in reduced abrasion resistance. Carbon black having a DBP of more than 200 mL/100 g may have lower dispersibility, thereby deteriorating fuel economy.

The DBP of carbon black can be measured in accordance with JIS K 6217-4:2001.

The amount of carbon black per 100 parts by mass of the rubber component is preferably 1 part by mass or more, more preferably 3 parts by mass or more. The amount is also preferably 50 parts by mass or less, more preferably 30 parts by mass or less, still more preferably 20 parts by mass or less. When it is less than 1 part by mass, abrasion resistance may deteriorate. When it is more than 50 parts by mass, fuel economy may deteriorate.

Non-limiting examples of the silica include dry silica (anhydrous silicic acid) and wet silica (hydrous silicic acid). Wet silica is preferred because it has a large number of silanol groups.

The silica preferably has a N₂SA of 100 m²/g or more, more preferably 150 m²/g or more. The N₂SA is also preferably 300 m²/g or less, more preferably 200 m²/g or less. Silica having a N₂SA of less than 100 m²/g tends to have a low reinforcing effect, failing to sufficiently improve abrasion resistance. Silica having a N₂SA of more than 300 m²/g tends to poorly disperse, thereby deteriorating fuel economy.

The N₂SA of silica can be measured in accordance with ASTM D3037-81.

The amount of silica per 100 parts by mass of the rubber component is preferably 1 part by mass or more, more preferably 10 parts by mass or more, still more preferably 30 parts by mass or more, particularly preferably 50 parts by mass or more. The amount is also preferably 150 parts by mass or less, more preferably 100 parts by mass or less. When it is less than 1 part by mass, fuel economy and abrasion resistance tend to be insufficient. More than 150 parts by mass of silica tends to poorly disperse, thereby deteriorating processability.

The rubber composition of the present invention preferably contains a silane coupling agent together with silica.

The silane coupling agent may be any silane coupling agent conventionally used in combination with silica in the rubber industry. Examples include sulfide silane coupling agents such as bis(3-triethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyl-trimethoxysilane; and chloro silane coupling agents such as 3-chloropropyltrimethoxysilane. Preferred among these are sulfide silane coupling agents, with bis(3-triethoxysilylpropyl)tetrasulfide being more preferred.

In the case of the rubber composition containing a silane coupling agent, the amount of the silane coupling agent per 100 parts by mass of silica is preferably 1 part by mass or more, more preferably 2 parts by mass or more. The amount is also preferably 20 parts by mass or less, more preferably 15 parts by mass or less. An amount of less than 1 part by mass tends to fail to have sufficient effects, e.g., in improving dispersibility. An amount of more than 20 parts by mass tends to have an insufficient coupling effect, resulting in reduced reinforcing properties.

The rubber composition of the present invention may optionally incorporate compounding agents conventionally used in the rubber industry, in addition to the components described above. Examples of such agents include other reinforcing fillers, antioxidants, oils, waxes, vulcanizing agents such as sulfur, and vulcanization accelerators.

The rubber composition of the present invention may be used in treads (cap treads, base treads), sidewalls, and other components of tires and is suitable especially for treads, particularly cap treads.

The pneumatic tire of the present invention can be formed from the above-described rubber composition by usual methods.

Specifically, the rubber composition incorporating the components described above, before vulcanization, is extruded and processed into the shape of a tire component, e.g. a tread and assembled with other tire components on a tire building machine in a usual manner to build an unvulcanized tire. The unvulcanized tire is heated and pressurized in a vulcanizer to obtain a tire.

The pneumatic tire of the present invention is suitable for passenger vehicles, large passenger vehicles, large SUVs, heavy-duty vehicles such as trucks and buses, and light trucks, and may be used as a winter tire or studless winter tire for these vehicles.

### EXAMPLES

The present invention is specifically described with reference to examples but is not limited only thereto.

The chemicals used in production examples are listed below.
Ion-exchanged water: in-house product
Potassium rosinate soap: available from Harima Chemicals Group, Inc.
Fatty acid sodium soap: available from Wako Pure Chemical Industries, Ltd.
Potassium chloride: available from Wako Pure Chemical Industries, Ltd.
Sodium naphthalenesulfonate-formaldehyde condensate: available from Kao Corporation
1,3-Butadiene: 1,3-butadiene available from Takachiho Trading Co., Ltd.
Styrene: styrene available from Wako Pure Chemical Industries, Ltd. (a compound of formula (2))
t-Dodecyl mercaptan: tert-dodecyl mercaptan available from Wako Pure Chemical Industries, Ltd. (chain transfer agent)
Si363: 3-[ethoxybis(3,6,9,12,15-pentaoxaoctacosan-1-yloxy)silyl]-1-propanethiol available from Degussa (chain transfer agent, the compound represented by the formula below, a compound of formula (3)) 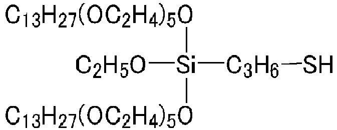
3-Mercaptopropyltriethoxysilane: product available from Tokyo Chemical Industry Co., Ltd. (chain transfer agent, a compound of formula (3))
2-Ethylhexyl 3-mercaptopropionate: product available from Tokyo Chemical Industry Co., Ltd. (chain transfer agent, a compound of formula (4))
2-Mercaptoethyl octanoate: product available from Tokyo Chemical Industry Co., Ltd. (chain transfer agent, a compound of formula (4))
Sodium hydrosulfide: available from Wako Pure Chemical Industries, Ltd.
FeSO₄: ferric sulfate available from Wako Pure Chemical Industries, Ltd.
EDTA: sodium ethylenediaminetetraacetate available from Wako Pure Chemical Industries, Ltd.
Rongalite: sodium formaldehyde sulfoxylate available from Wako Pure Chemical Industries, Ltd.
Polymerization initiator: PERMENTA H (paramenthane hydroperoxide) available from NOF Corporation
N,N-Diethylhydroxylamine: available from Wako Pure Chemical Industries, Ltd.
2,6-Di-t-butyl-p-cresol: Sumilizer BHT available from Sumitomo Chemical Co., Ltd.
Vinyl cinnamate: product available from Tokyo Chemical Industry Co., Ltd. (a compound of formula (1))

### (Preparation of emulsifier)

An emulsifier was prepared by adding 9,356 g of ion-exchanged water, 1,152 g of potassium rosinate soap, 331 g of fatty acid sodium soap, 51 g of potassium chloride, and 30 g of sodium naphthalenesulfonate-formaldehyde condensate, followed by stirring at 70°C for 2 hours.

### (Production Example 1)

A 50 L (interior volume) stainless steel polymerization reactor was cleaned, dried, and purged with dry nitrogen. Then, the reactor was charged with 3,500 g of 1,3-butadiene, 1,500 g of styrene, 5.74 g of t-dodecyl mercaptan, 9,688 g of the emulsifier, 6.3 mL of sodium hydrosulfide (1.8 M), 6.3 mL each of the activators (FeSO₄/EDTA/Rongalite), and 6.3 mL of the polymerization initiator (2.3 M), followed by polymerization at 10°C for 3 hours with stirring. After the completion of the polymerization, 2.9 g of N,N-diethylhydroxylamine was added to the reaction mixture and they were reacted for 30 minutes. The contents were taken out from the polymerization reactor and combined with 10 g of 2,6-di-t-butyl-p-cresol. After most of the water was evaporated off, the residue was dried under reduced pressure at 55°C for 12 hours to obtain copolymer 1.

### (Production Example 2)

Copolymer 2 was prepared as in Production Example 1, except that 1,500 g of vinyl cinnamate was used instead of 1,500 g of styrene.

### (Production Example 3)

Copolymer 3 was prepared as in Production Example 1, except that 1,500 g of vinyl cinnamate was used instead of 1,500 g of styrene, and 6.11 g of Si363 was used instead of 5.74 g of t-dodecyl mercaptan.

### (Production Example 4)

Copolymer 4 was prepared as in Production Example 1, except that 1,500 g of vinyl cinnamate was used instead of 1,500 g of styrene, and 1.48 g of 3-mercaptopropyltriethoxysilane was used instead of 5.74 g of t-dodecyl mercaptan.

### (Production Example 5)

Copolymer 5 was prepared as in Production Example 1, except that 1,500 g of vinyl cinnamate was used instead of 1,500 g of styrene, and 1.35 g of 2-ethylhexyl 3-mercaptopropionate was used instead of 5.74 g of t-dodecyl mercaptan.

### (Production Example 6)

Copolymer 6 was prepared as in Production Example 1, except that 1,500 g of vinyl cinnamate was used instead of 1,500 g of styrene, and 1.26 g of 2-mercaptoethyl octanoate was used instead of 5.74 g of t-dodecyl mercaptan.

Table 1 shows the amount of butadiene (conjugated diene monomer), amount of vinyl cinnamate (a compound of formula (1)), amount of styrene, Mw, and Mw/Mn of copolymers 1 to 6 prepared in Production Examples 1 to 6. These values were determined as collectively described below.

### (Amounts of monomer units)

A ¹H-NMR spectrum was measured using a JNM-A 400 NMR spectrometer (available from JEOL) at 25°C. This spectrum was used to calculate the ratio of the phenyl protons of the styrene unit at 6.5 to 7.2 ppm, the vinyl protons of the butadiene unit at 4.9 to 5.4 ppm, and the protons of the vinyl-derived moiety of the compound unit of formula (1) at 1.5 to 2.5 ppm. Then, the amounts of the monomer units were determined from the ratio.

### (Determination of weight average molecular weight (Mw) and number average molecular weight (Mn))

The weight average molecular weight (Mw) and number average molecular weight (Mn) of the copolymers were determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

**[Table 1]**

| | Production Example 1 (Copolymer 1) | Production Example 2 (Copolymer 2) | Production Example 3 (Copolymer 3) | Production Example 4 (Copolymer 4) | Production Example 5 (Copolymer 5) | Production Example 6 (Copolymer 6) |
|---|---|---|---|---|---|---|
| Amount of butadiene (conjugated diene monomer) (% by mass) | 76 | 76 | 76 | 76 | 76 | 76 |
| Amount of vinyl cinnamate (formula (1)) (% by mass) | - | 24 | 24 | 24 | 24 | 24 |
| Amount of styrene (% by mass) | 24 | - | - | - | - | - |
| Weight average molecular weight (Mw) | 510,000 | 500,000 | 500,000 | 500,000 | 500,000 | 490,000 |
| Molecular weight distribution (Mw/Mn) | 3.6 | 4.0 | 4.0 | 4.0 | 4.0 | 4.0 |

The chemicals used in examples and comparative example were listed below.
Rubber component: Copolymer 1 to 6 prepared in Production Example 1 to 6
Carbon black: SHOBLACK N220 (N₂SA: 111 m²/g, DBP: 115 mL/100 g) available from Cabot Japan K.K.
Silica: ULTRASIL VN3 (N₂SA: 175 m²/g) available from Degussa
Silane coupling agent: Si69 (bis(3-triethoxysilylpropyl)tetrasulfide) available from Degussa
Zinc oxide: Zinc oxide #1 available from Mitsui Mining and Smelting Co., Ltd.
Stearic acid: Stearic acid available from NOF Corporation
Antioxidant: NOCRAC 6C (N-1,3-dimethylbutyl-N'-phenyl-p-phenylenediamine) available from Ouchi Shinko Chemical Industrial Co., Ltd.
Wax: Sunnoc Wax available from Ouchi Shinko Chemical Industrial Co., Ltd.
Vulcanization accelerator 1: Nocceler CZ (N-cyclohexyl-2-benzothiazolylsulfenamide) available from Ouchi Shinko Chemical Industrial Co., Ltd.
Vulcanization accelerator 2: Nocceler D (N,N'-diphenylguanidine) available from Ouchi Shinko Chemical Industrial Co., Ltd.
Sulfur: Sulfur powder available from Tsurumi Chemical Industry Co., Ltd.

### <Examples and Comparative Example>

According to each of the formulations shown in Table 2, the chemicals other than the sulfur and vulcanization accelerators were kneaded using a Banbury mixer at 150°C for 5 minutes. To the kneaded mixture were added the sulfur and vulcanization accelerators, and they were kneaded using an open roll mill at 170°C for 12 minutes to obtain an unvulcanized rubber composition.

The unvulcanized rubber composition was press-vulcanized at 170°C for 20 minutes to obtain a vulcanized rubber composition.

The unvulcanized rubber compositions and vulcanized rubber compositions prepared as above were evaluated as follows. Table 2 shows the results.

### (Processability)

Each unvulcanized rubber composition was measured for Mooney viscosity at 100°C in accordance with JIS K 6300. A lower value indicates better processability.

### (Wet grip performance)

The viscoelastic parameter of a specimen prepared from each vulcanized rubber composition was determined using a viscoelastometer (ARES, available from Rheometric Scientific) in a torsional mode. The tanδ was measured at 0°C, a frequency of 10 Hz, and a strain of 1%. A higher tanδ indicates better wet grip performance.

### (Fuel economy)

The tanδ of each vulcanized rubber composition was measured using a viscoelasticity spectrometer VES (Iwamoto Seisakusho Co., Ltd.) at a temperature of 60°C, an initial strain of 10%, and a dynamic strain of 2%. A lower tanδ indicates better fuel economy.

### (Abrasion resistance)

The abrasion loss of each vulcanized rubber composition was measured with a Lambourn abrasion tester at room temperature, an applied load of 1.0 kgf, and a slip ratio of 30% and expressed as an index using the equation below. A higher index indicates better abrasion resistance. (Abrasion resistance index) = (Abrasion loss of Comparative Example 1)/(Abrasion loss of each formulation example) × 100

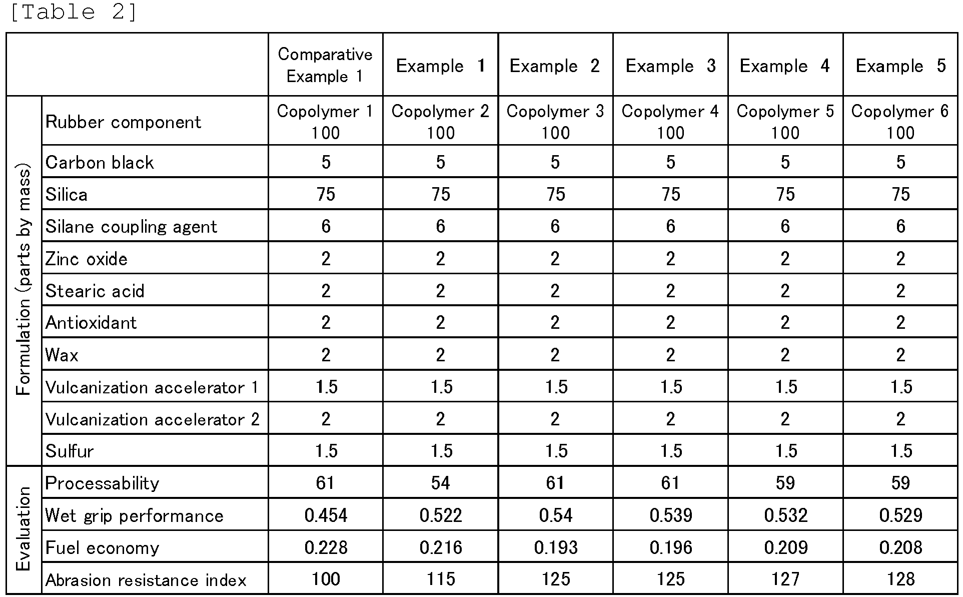

Table 2 demonstrates that a balanced improvement in fuel economy, abrasion resistance, and wet grip performance was achieved while ensuring good processability in the examples in which copolymers 2 to 6 containing a structural unit derived from a conjugated diene monomer and a structural unit derived from a compound of formula (1) were incorporated together with carbon black and/or silica.

## Claims

1. A pneumatic tire, comprising a tread formed from the rubber composition, the rubber composition comprising:
a rubber component comprising a copolymer; and
at least one of carbon black or silica,
the copolymer containing a structural unit derived from a conjugated diene monomer and a structural unit derived from a compound represented by the following formula (1): 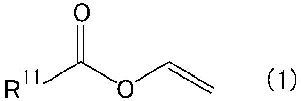 wherein R¹¹ represents a C1-C30 hydrocarbon group.

2. The pneumatic tire according to claim 1,
wherein the copolymer contains, based on 100% by mass of structural units of the copolymer, 5% to 95% by mass of the structural unit derived from a conjugated diene monomer and 5% to 95% by mass of the structural unit derived from a compound of formula (1).

3. The pneumatic tire according to claim 1 or 2,
wherein the copolymer has a weight average molecular weight of 5,000 to 2,000,000 and a molecular weight distribution of 2.1 to 11.

4. The pneumatic tire according to any one of claims 1 to 3,
wherein the compound of formula (1) is vinyl cinnamate.

5. The pneumatic tire according to any one of claims 1 to 4,
wherein the conjugated diene monomer is 1,3-butadiene.

6. The pneumatic tire according to any one of claims 1 to 5,
wherein the copolymer has at its end a functional group having an affinity for filler.

## Patentansprüche

1. Luftreifen, der eine Lauffläche umfasst, die aus einer Kautschukzusammensetzung gebildet ist, wobei die Kautschukzusammensetzung umfasst:
eine Kautschukkomponente, die ein Copolymer umfasst; und
zumindest eines von Ruß oder Siliciumdioxid,
wobei das Copolymer eine Struktureinheit enthält, die von einem konjugierten Dienmonomer abstammt, und eine Struktureinheit, die von einer Verbindung abstammt, die durch die folgende Formel (1) dargestellt ist: 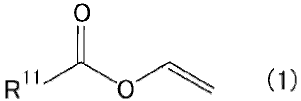 wobei R¹¹ für eine C1-C30-Kohlenwasserstoffgruppe steht.

2. Luftreifen nach Anspruch 1,
wobei das Copolymer bezogen auf 100 Masse-% von Struktureinheiten des Copolymers 5 Masse-% bis 95 Masse-% der Struktureinheit, die von einem konjugierten Dienmonomer abstammt, und 5 Masse-% bis 95 Masse-% der Struktureinheit, die von einer Verbindung der Formel (1) abstammt, enthält.

3. Luftreifen nach Anspruch 1 oder 2,
wobei das Copolymer ein gewichtsgemitteltes Molekulargewicht von 5 000 bis 2 000 000 und eine molekulare Gewichtsverteilung von 2,1 bis 11 aufweist.

4. Luftreifen nach einem der Ansprüche 1 bis 3,
wobei die Verbindung der Formel (1) Vinylcinnamat ist.

5. Luftreifen nach einem der Ansprüche 1 bis 4,
wobei das konjugierte Dienmonomer 1,3-Butadien ist.

6. Luftreifen nach einem der Ansprüche 1 bis 5,
wobei das Copolymer an seinem Ende eine funktionelle Gruppe mit einer Affinität für Füllstoff aufweist.

## Revendications

1. Bandage pneumatique, comprenant une bande de roulement formée d'une composition à base de caoutchouc, la composition à base de caoutchouc comprenant :
un composant caoutchouc comprenant un copolymère ; et
au moins un parmi le noir de carbone et la silice,
le corps polymère contenant unité structurelle dérivée d'un monomère diène conjugué et une unité structurelle dérivée d'un composé représenté par la formule suivante (1) : 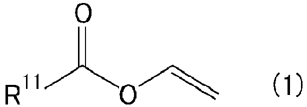 dans laquelle R11 représente un groupe hydrocarbure en C1-C30.

2. Bandage pneumatique selon la revendication 1,
dans lequel le copolymère contient, sur la base de 100 % en masse des unités structurelles du copolymère, de 5 % à 95 % en masse de l'unité structurelle dérivée d'un monomère diène conjugué et de 5 % à 95 % en masse de l'unité structurelle dérivée d'un composé de la formule (1).

3. Bandage pneumatique selon la revendication 1 ou 2,
dans lequel le copolymère a un poids moléculaire moyen de 5000 à 2 000 000, et une distribution de poids moléculaire de 2,1 à 11.

4. Bandage pneumatique selon l'une quelconque des revendications 1 à 3,
dans lequel le composé de formule (1) est du cinnamate de vinyle.

5. Bandage pneumatique selon l'une quelconque des revendications 1 à 4,
dans lequel le monomère diène conjugué est du 1,3-butadiène.

6. Bandage pneumatique selon l'une quelconque des revendications 1 à 5,
dans lequel le copolymère a, à son extrémité, un groupe fonctionnel ayant une affinité pour un agent de charge.
